# EUROPEAN PATENT APPLICATION

(11) **EP 3 871 953 A1**
(43) Date of publication of application: **01.09.2021**
(21) Application number: 20186390.9
(22) Date of filing: 17.07.2020
(51) Int. Cl.: B62D 27/02, B62D 31/02

(54) **VEHICLE FRAMEWORK STRUCTURE AND VEHICLE**

(30) Priority: 28.02.2020 CN 202010128918
(71) Applicant: Zonson Smart Auto Corporation, Zhuhai, Guangdong 519000 (CN)
(72) Inventor: Yao, Cheng, Zhuhai, Guangdong 519000 (CN); Zhang, Lijiang, Zhuhai, Guangdong 519000 (CN); Liu, Chengyi, Zhuhai, Guangdong (CN); Lan, Pinghui, Zhuhai, Guangdong 519000 (CN); Tang, Zhangming, Zhuhai, Guangdong 519000 (CN)
(74) Representative: Twelmeier Mommer & Partner

(57) **Abstract**

Disclosed is a vehicle framework structure including: a post provided with a first mortise that has an opening tapering from interior to exterior; a first side beam with a first tenon complementary in shape with the first mortise. The first tenon is configured to be inserted into the first mortise. The vehicle framework structure of the disclosure ensures the stability of the framework connection while increases the available space at the corner of the framework. A vehicle is further disclosed.

## Description

### TECHNICAL FIELD

The disclosure relates to the field of vehicle structures, in particular to a vehicle framework structure and a vehicle.

### BACKGROUND

Generally, current large passenger cars have a framework of a truss structure, and connecting components such as casting angle iron or refined angle steel are frequently used for riveting at joints in the framework. On one hand, stress would be easily concentrated at the joints thus forming cracks in the framework, on the other hand, the overall weight of the vehicle would be increased, restricting the lightweight design for vehicle.

In this regard, a vehicle framework is proposed in the prior art in which mortises are provided on two rods, and connecting ribs are joggled in the two rods. Although this configuration would reduce the structural weight resulting from riveting, however, arrangement of the connecting ribs would occupy the space inside the framework formed by the rods, so that the internal space of the framework cannot be fully utilized, in addition, the view through the vehicle glass installed within the internal space would be blocked by the connecting ribs.

### SUMMARY

The disclosure at least solves or alleviates one of the above mention technical problems. In view of this, there is provided a vehicle framework structure according to the disclosure, which ensures the stability of the framework connection while increases the available space at the corner of the framework.

In one aspect of the disclosure, there is provided a vehicle framework structure including: a post provided with a first mortise that has an opening tapering from interior to exterior; a first side beam with a first tenon complementary in shape with the first mortise. The first tenon is configured to be inserted into the first mortise.

In some embodiments, two first side beams are provided, and the post is provided with two first mortises which are symmetric with respect to an extending direction of the post.

In some embodiments, the post is provided with a second mortise on an outer side of the post, the second mortise has an opening tapering from exterior to interior, the opening of the first mortise has a narrowest portion communicating with a narrowest portion of the opening of the second mortise, and the first side beam is provided with a second tenon configured to be inserted into the second mortise.

In some embodiments, the vehicle framework structure further includes a second side beam, with at least a portion of the second side beam positioned between the two first side beams.

In some embodiments, the second side beam includes a web with at least a portion between the two first side beams, and a flange plate above the two first side beams, the web and the flange plate are interconnected with each other.

In some embodiments, the flange plate is provided with a protrusion abutted against both of the first tenon and the second tenon.

In some embodiments, the web is connected with two flange plates positioned on both sides of the first side beam respectively.

In some embodiments, the second side beam is configured as a pillar.

In some embodiments, the first side beam is configured as a pillar with a cross section identical to a cross section of the first tenon.

In another aspect of the disclosure, there is provided a vehicle including the foregoing framework structure.

During assembling of the vehicle framework structure of the disclosure, the first tenon of the first side beam is inserted into the first mortise of the post, such that the post and the first side beam are secured. The tapering of the first mortise from interior to exterior prevents the first tenon from sliding out from the opening of the first mortise, enabling a strong stability of the framework structure. No additional connection is needed for securing the post with the first side beam as a result of the joggle joint of the two, so that no obstruction is formed at the corner formed by the first side beam and the post, greatly increasing the available space.

Additional aspects and advantages of the disclosure will be partially described in the following detailed description, and some of them will become apparent, or be understood through the practice of the disclosure.

### BRIEF DESCRIPTION OF THE DRAWINGS

Above and/or additional aspects and advantages of the disclosure will become apparent from the following detailed description when considered in conjunction with the annexed drawings, in which:
FIG. 1 is an axial side view of a vehicle support structure according to an embodiment of the disclosure;
FIG. 2 is a front view of a post according to an embodiment of the disclosure;
FIG. 3 is a side view of the vehicle support structure according to an embodiment of the disclosure;
FIG. 4 is a cross-sectional view taken along line A-A in FIG. 3;
FIG. 5 is a schematic diagram of a vehicle framework according to an embodiment of the disclosure.

### List of reference numerals

- 100: Post
- 110: First Mortise
- 120: Second Mortise
- 200: First Side Beam
- 210: First Tenon
- 220: Second Tenon
- 300: Second Side Beam
- 310: Flange Plate
- 320: Protrusion

### DETAILED DESCRIPTION

Reference will now be made in detail to the embodiments of the present invention, examples of which are illustrated in the accompanying drawings, wherein like reference numerals refer to the same or similar elements or elements having the same or similar functions throughout. The embodiments described below with reference to the accompanying drawings are illustrative only for the purpose of explaining the disclosure and are not to be construed as limiting the disclosure.

In the description of the disclosure, it should be understood that the positional descriptions referred to, for example, the directional or positional relationships indicated by upper, lower, front, rear, left, right, etc., are based on the directional or positional relationships shown in the drawings, and are only for convenience and simplification of description of the disclosure, but not for indicating or implying that the referred device or element must have a specific direction, be constructed and operated in a specific direction, and thus should not be construed as limiting the disclosure.

In the description of the disclosure, "certain" means one or more, "a plurality of' means two or more, and "greater than", "less than", "more than", etc. are understood as excluding the number itself, "above", "below", "within", etc. are understood as including the number itself. "First", "second", etc., if referred to, are for the purpose of distinguishing technical features only, cannot be understood as indicating or implying a relative importance or implicitly indicating the number of technical features indicated or implicitly indicating the precedence of technical features indicated.

In the description of the disclosure, unless otherwise clearly defined, terms such as "arrange", "install", "connect" should be understood in a broad sense, and those skilled in the art can reasonably determine the specific meanings of the above terms in the disclosure by combining the specific contents of the technical solutions.

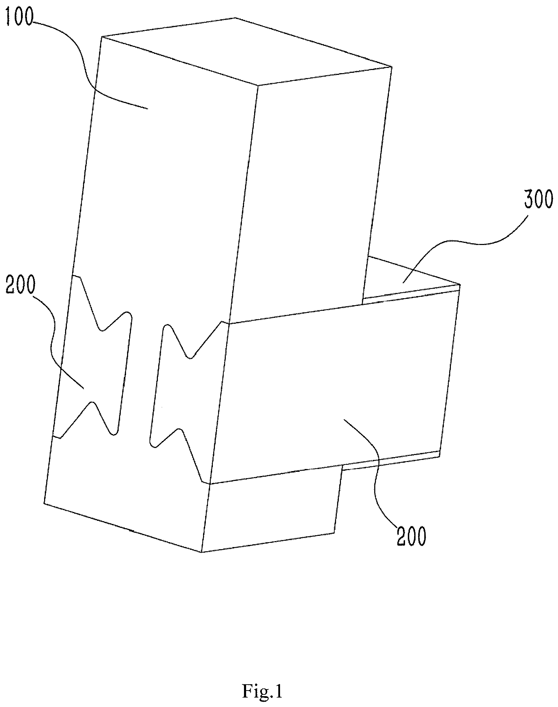

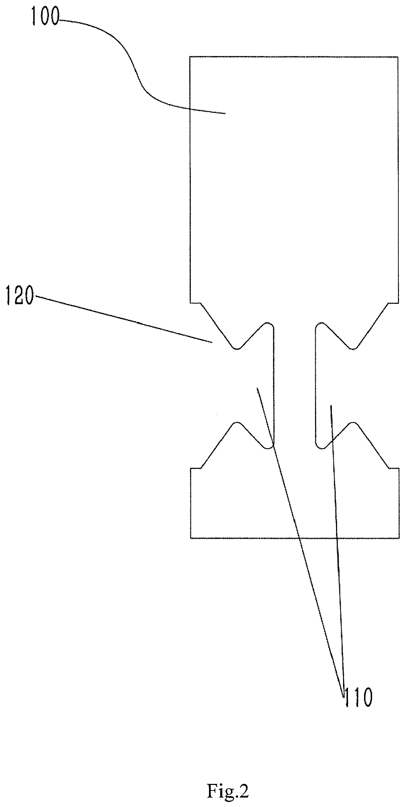

Referring to FIGS. 1-4, there is provided a vehicle framework structure including: a post 100 with a first mortise 110 that has an opening tapering from interior to exterior, and a first side beam 200 with a first tenon 210 complementary in shape with the first mortise 110. The first tenon 210 is configured to slide into the first mortise 110.

During assembling of the vehicle framework structure in this embodiment, the first tenon 210 of the first side beam 200 is inserted into the first mortise 110 of the post 100, such that the post 100 and the first side beam 200 are secured. The tapering of the first mortise 110 from interior to exterior prevents the first tenon 210 from sliding out from the opening of the first mortise 110, enabling a strong stability of the framework structure. No additional connection is needed for securing the post 100 with the first side beam 200 as a result of the joggle joint of the two, so that no obstruction is formed at the corner formed by the first side beam 200 and the post 100, greatly increasing the available space.

In particular, the opening of the first mortise 110 in this embodiment refers to the opening parallel to the extending direction of the first mortise 110, rather than the opening perpendicular to the extending direction of the first mortise 110.

As for the first mortise 110 tapering from interior to exterior, the interior refers to a direction inside the post 100, and the exterior refers to a direction from inside to outside of the post 100.

The first tenon 210 on the first side beam 200 may be secured to a body of the first side beam 200 in various manners, such as bonding, welding, or directly integrating the first side beam 200 with the first tenon 210 as one piece. The post 100 with the first mortise 110 may also be integrally formed as one piece by cold extrusion or forging.

The post 100 and the first side beam 200 may be formed from aluminum alloy material in order to reduce the overall weight of the vehicle. Glue may be injected into the first mortise 110 after assembling of the first side beam 200 and the post 100 to enhance the stability of the assembling. Different glues may be selected based on different materials, such as glues special for aluminum alloy and the like. UV glue may be further coated on the first tenon 210, and a gap within the first mortise 110 may be illuminated with UV light after assembling, not only significantly enhancing the stability of the framework, but also further reducing the influence of glue viscosity on assembling.

As shown in FIGS. 1, 2 and 4, the first mortise 110 has a root with a small geometric size, at which stress concentration is prone to occur. In order to prevent the post 100 from shaking excessively along its extending direction resulting in cracks in the root of the first mortise 110 and thus affecting the structural strength, two first side beams 200 are provided, and the post 100 is provided with two first mortises 110 which are symmetric with respect to the extending direction of the post 100. In such configuration, the first side beams 200 arranged on both sides of the post 100 provide effective support within the two first mortises 110 as the post 100 shakes, preventing cracks from forming in the root of the first mortise 110 due to the excessive shaking of the post 100.

In some embodiments, the post 100 is further provided with a second mortise 120 on an outer side of the post 100. The second mortise 120 has an opening tapering from exterior to interior, and the opening of the first mortise 110 has a narrowest portion communicating with a narrowest portion of the opening of the second mortise 120. The first side beam 200 is provided with a second tenon 220 configured to be inserted into the second mortise 120. Due to the opposite orientations of the two first mortises 110, forces exerted on the two first tenons 210 inserted therein by the two first mortises 110 are in opposite directions as the framework is shaking, thus greatly inhibiting the shaking of the first tenons 210 in the first mortises 110, thus enhancing the stability of joggle joint of the first side beam 200 in the post 100.

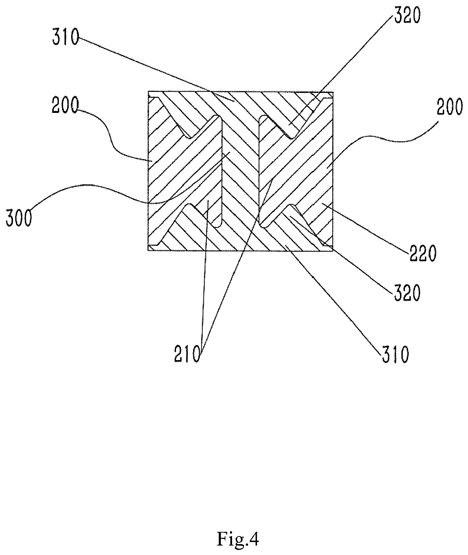

As shown in FIG. 4, in order to provide support between the two first side beams 200 and prevent the two first side beams 200 from being recessed towards each other, the vehicle framework structure is further provided with a second side beam 300, with at least a portion of the second side beam 300 positioned between the two first side beams 200.

Similar to the assembling process of the first side beam 200 and the post 100, glue may be injected into the gap between the first and second side beams 200, 300 to enhance stability after the assembling of the first and second side beams 200, 300 is done.

As shown in FIG. 4, the second side beam 300 includes a web with at least a portion between the two first side beams 200, and a flange plate 310 above the two first side beams 200, the web and the flange plate 310 are interconnected with each other. The flange plate 310 can prevent the second side beam 300 from sliding out towards below the first side beam 200.

In some embodiments, the flange plate 310 is provided with protrusions 320 abutted against the first and second tenons 210, 220. As shown in FIG. 4, the first side beam 200 is provided with the first and second tenons 210, 220 between which recesses are formed so as to match the shapes of the first and second mortises 110, 120. In this case, cooperation of the protrusions 320 with the recesses can further strengthen the tightness between the first and second side beams 200, 300.

In some embodiments, the web is connected with two flange plates 310 positioned on both sides of the first side beam 200 respectively.

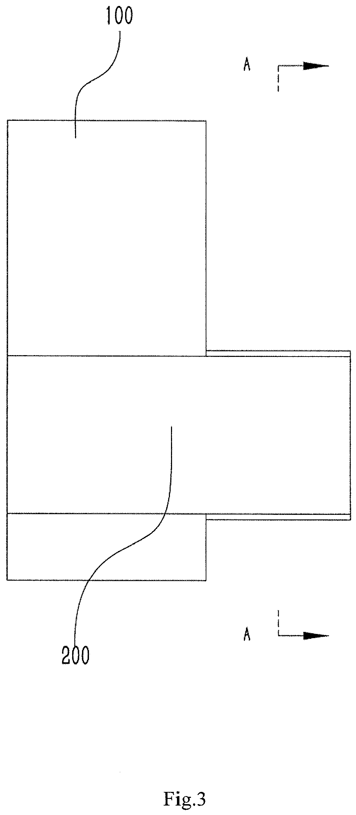

As shown in FIG. 3 and FIG. 4, the first and second side beams 200, 300 may be configured a pillar, that is, a polyhedron with two surfaces being identical and parallel to each other and intersection lines of each two adjacent surfaces being parallel to each other. The first and second side beams 200, 300 may be manufactured through cold extrusion fast and conveniently with reduced cost.

As shown in FIG. 4, in the case that the first side beam 200 is configured as a pillar, the cross section of the first side beam 200 is formed by the combination of the two first tenons 210. The first side beam 200 can be directly inserted into the first mortise 110 on the post 100 during assembling.

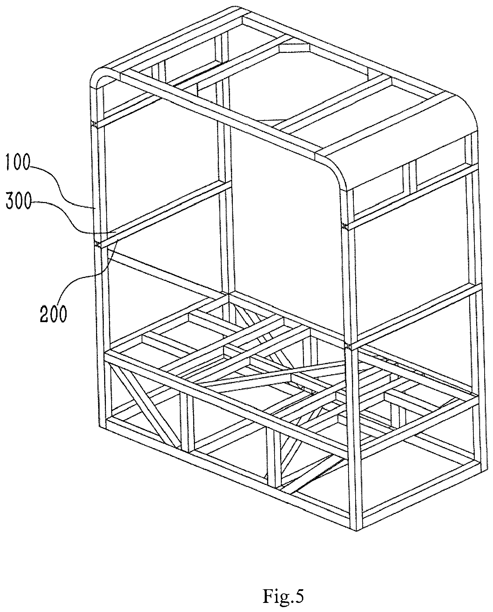

There is further provided a vehicle according to an embodiment of the disclosure, including the above-mentioned vehicle framework structure. The above vehicle framework structure is adopted in a frame of the vehicle, as shown in FIG. 5.

Specifically, the above-mentioned vehicle framework structure may be adopted at a position where the side window glass is installed, so that the space between the first side beam 200 and the post 100 is not block by any securing parts, thus ensuring a better view.

The embodiments of the disclosure have been described in detail with reference to the drawings, but the disclosure is not limited to the above embodiments, and various changes can be made within the knowledge of those skilled in the art without departing from the principle of the disclosure.

## Claims

1. A vehicle framework structure, comprising:
a post (100) provided with a first mortise (110) that has an opening tapering from interior to exterior;
a first side beam (200) with a first tenon (210) complementary in shape with the first mortise (110), the first tenon (210) being configured to be inserted into the first mortise (110).

2. The vehicle framework structure of claim 1, wherein two first side beams (200) are provided, and the post (100) is provided with two first mortises (110) which are symmetric with respect to an extending direction of the post (100).

3. The vehicle framework structure of claim 2, wherein the post (100) is provided with a second mortise (120) on an outer side of the post (100), the second mortise (120) has an opening tapering from exterior to interior, the opening of the first mortise (110) has a narrowest portion communicating with a narrowest portion of the opening of the second mortise (120), and the first side beam (200) is provided with a second tenon (220) configured to be inserted into the second mortise (120).

4. The vehicle framework structure of claim 3, further comprising a second side beam (300), with at least a portion of the second side beam (300) positioned between the two first side beams (200).

5. The vehicle framework structure of claim 4, wherein the second side beam (300) comprises a web with at least a portion between the two first side beams (200), and a flange plate (310) above the two first side beams (200), the web and the flange plate (310) are interconnected with each other.

6. The vehicle framework structure of claim 5, wherein the flange plate (310) is provided with a protrusion (320) abutted against both of the first tenon (210) and the second tenon (220).

7. The vehicle framework structure of claim 5, wherein the web is connected with two flange plates (310) positioned on both sides of the first side beam (200) respectively.

8. The vehicle framework structure of claim 4, wherein the second side beam (300) is configured as a pillar.

9. The vehicle framework structure of claim 1, wherein the first side beam (200) is configured as a pillar with a cross section identical to a cross section of the first tenon (210).

10. A vehicle comprising the vehicle framework structure of any one of claims 1 to 9.
